# EUROPEAN PATENT SPECIFICATION

(11) **EP 1 518 113 B1**
(45) Date of publication and mention of the grant of the patent: **07.10.2009**
(21) Application number: 03740766.5
(22) Date of filing: 02.07.2003
(51) Int. Cl.: G01N 29/26, G01B 17/02

(54) **A METHOD AND APPARATUS FOR ULTRASONICALLY INSPECTING THE INTEGRITY OF A TUBULAR**
VERFAHREN UND VORRICHTUNG ZUR ULTRASCHALLINSPEKTION DER INTEGRITÄT VON ROHREN
PROCEDE ET APPAREIL D'INSPECTION ULTRASONORE DE L'INTEGRITE D'UN ELEMENT TUBULAIRE

(30) Priority: 02.07.2002 US 189059
(43) Date of publication of application: 30.03.2005
(73) Proprietor: Varco I/P, Inc., Houston TX 77042-4200 (US)
(72) Inventor: LAM, Clive, Chemo, Tomball, TX 77375 (US); HARRIS, John, Edward, Friendswood, TX 77546 (US)
(74) Representative: Lucas, Brian Ronald
(86) International application number: PCT/GB2003/002840
(87) International publication number: WO 2004/005915

(56) References cited:
- EP-A- 0 444 800
- EP-A- 0 990 897
- US-A- 4 597 294
- US-A- 4 725 963
- US-A- 4 909 091
- US-A- 5 030 911
- US-A- 5 156 636
- US-A- 5 460 046

## Description

The present invention relates to a method of inspecting the integrity of a tubular, to a method of estimating the mechanical properties of a tubular, to an apparatus for performing the inspection method, and to a computer program product comprising computer executable instructions for causing the apparatus to perform the inspection method.

US-A-5 030 911 discloses a method and apparatus for determining the extent of defects in tubular elements for use in the oil and gas industry. An electromagnetic inspection device co-operates with longitudinal and circumferential position detectors for determining the position and configuration of defects in a tubular. The electromagnetic inspection device produces a defect signal that is subjected to a threshold. That part of the signal below the threshold is discarded and that part of the signal above the threshold is displayed on a chart to provide the longitudinal and circumferential position of the defect. The chart is then used to locate defects quickly for a visual inspection to determine whether or not the tubular should be rejected.

Unfortunately this prior method only highlights very localised defects of a greater magnitude than a predetermined threshold. Thus choice of the threshold is critical. Furthermore, many tubulars are produced for the oil and gas industry that have comparatively large expanses of above-average (or below defect threshold) wall thickness that are nevertheless below the maximum or intended wall thickness. The overall mechanical properties of such tubulars are reduced compared to tubulars having the intended wall thickness throughout their whole length,

It is important in the oil and gas industry that tubulars of all types have the appropriate mechanical properties (for example strength) for their intended purpose. The trend in the art has been to examine tubulars for severe defects, such as those found by the method of US-A-5 030 211 and, as appropriate, to reject such tubulars. No distinction has been made between tubulars that might have no severe defects but that have very different overall mechanical properties due to areas of reduced wall thickness for example.

Thus a plurality of pieces of pipe, all judged "acceptable" according to some pre-selected defect criteria, such as that of US-A-5 030 911, cannot be further classified into "stronger" or less risky pipe for use in more stressful locations and "weaker" or more risky pipe for use in less stressful locations. For example, when the pipe is used in a drill string in a wellbore drilling operation, it is desirable to have the strongest or least risky pipe at the bottom of the string near or adjacent a drill bit since pipe at this location typically undergoes the greatest stress imposed on the drill string.

US-A-4 909 091 discloses a method and apparatus for detention of corrosion, pitting and the like in pipelines. The apparatus is housed in a scraper that is moved along a fluid-filled pipeline by fluid pressure. Ultrasonic sensors spaced around the circumference of the scraper measure the spacing of each sensor from the inner wall and outer wall of the pipe, thereby enabling wall thickness to be determined. By repeating the measurements whilst moving the scraper along the pipe, wall thickness measurements over most of the surface of the pipe can be recorded.

EP-A-0 444 800 discloses a rotary magnetic ultrasonic wall thickness measuring apparatus that is capable of measuring the wall thickness around the entire circumference of a steel pipe. The steel pipe is moved through the apparatus whilst inspecting, such that the apparatus defines a helical inspection path on the pipe. The pipe is divided into longitudinal inspection blocks and the wall thickness data for the entire circumference of the pipe in each inspection block is averaged and then subjected to a pass/fail threshold,

US-A-5 156 636 discloses an apparatus for measuring the outside diameter of nuclear fuel rods. The apparatus comprises diametrically opposed pairs of ultrasonic transducers spaced circumferentially around an inspection head. Rods to be inspected are passed through the head. By measuring the distance between each transducer and the outer surface of the rod, the diameter of the rod can be determined from measurements taken by diametrically opposed transducers. Repetition of these measurements whilst the rod is moving permits

Accordingly it is apparent that there is a need for an improved tubular integrity inspection method that enables more accurate classification of tubulars, for example classification by mechanical properties (such as strength). As used herein the term "tubular" is intended to include all pipe used in the oil and gas industry, examples of which are casing, tubing, and risers.

According to the present invention there is provided a method of inspecting the integrity of a tubular with a rotary-type ultrasonic inspection head, which method comprises the steps of:
(a) dividing the length of said tubular into a continuous series of length increments and with an ultrasonic inspection means taking measurements representative of the wall thickness around substantially the entire circumference at each length increment along substantially the entire length of said tubular;
(b) during step (a) measuring the longitudinal position of ultrasonic inspection means relative to said tubular, and associating each measurement to a particular length increment;
(c) generating electronic data from said measurements representative of the wall thickness over substantially the entire tubular; and
(d) electronically storing substantially all of said electronic data, the storage of data representing wall thickness over substantially the entire tubular facilitating both estimation of the overall mechanical properties of the tubular and identification of localised defects;
   characterised in that step (a) comprises the step of progressively taking said measurements around the circumference of said tubular by dividing the circumference of each length increment into a continuous series of segments, and for each length increment taking a plurality of measurements in each segment around said circumference, and electronically determining and storing a maximum, minimum and average wall thickness measurement for each segment,
   and in that step (b) comprises the steps of measuring the circumferential position of said ultrasonic inspection means relative to said tubular as each measurement is taken, associating each measurement with its respective circumferential position, and using said circumferential position to group measurements into said segments, whereby determination of said maximum, minimum and average wall thickness for each segment is facilitated.

In one embodiment all of the electronic data is correlated with respect to circumferential and longitudinal position of the tubular. Thus a map" of wall thickness for substantially the entire tubular can be created. Such a map may take the form of a contour map for example, or may be in the form of a computer generated three-dimensional graphic of the tubular.

Further steps are set out in claims 2 to 13 to which attention is hereby directed.

Methods and apparatus in accordance with the present invention may be used to provide the factual basis to reject a piece of pipe for a particular use; to categorize a number of "acceptable" pieces of pipe according to mechanical properties (such as their relative strengths) so that those pieces that are relatively stronger may be used in locations of greatest stress. The measurements and pipe location data can be presented in any desired form or format, including, but not limited to, in a table, in a data matrix, on a graph, in a data listing, or in a combination of these, and such a presentation that is on paper, on a screen or monitor, and/or on a strip chart.

According to another aspect of the present invention there is provided a method of estimating the mechanical properties of a tubular, which method comprises the steps of:
(a) analysing electronic data generated in accordance with the method above; and
(b) classifying each tubular, of a plurality of tubulars upon which said electronic data was obtained, according to the expected mechanical properties thereof.

Such analysis may be performed with a finite element analysis method for example.

According to another aspect of the present invention there is provided an apparatus for performing the method of claim 1, which apparatus comprises:
an ultrasonic inspection means rotatably mounted on a head that, in use, generates wall thickness measurements of a tubular under inspection;
electronic storage means for storing substantially all of the electronic data from said measurements generated by said inspection means;
longitudinal position sensor means for generating and electronic signal representative of the longitudinal position of said inspection means relative to said tubular; circumferential position sensor means for generating and electronic signal representative of the circumferential position of said inspection means relative to said tubular; and
an ultrasonic data processor, which apparatus is configured to perform the method steps of claim 1.

Further features of the apparatus are set out in claims 17 to 20 to which attention is hereby directed.

According to another aspect of the present invention there is provided a computer program product comprising computer executable instructions for causing the apparatus to perform the method of claim 1.

For a better understanding of the present invention reference will now be made, by way of example only, to the accompanying drawings in which: -
Fig. 1 is a schematic representation of an apparatus in accordance with the present invention for measuring the thickness of the wall of a tubular and processing measurements therefrom;
Fig. 2 is a schematic representation of part of the apparatus of Fig. 1;
Fig. 3 is a flow diagram of steps of a method in accordance with the present invention;
Fig. 4 is a graphical representation of a data matrix output from part of the apparatus of Fig. 1;
Fig. 5A is a schematic side view of a head on which ultrasonic transducers are mounted for measuring a wall thickness of a tubular passing therethrough;
Fig. 5B is a schematic end view of the head of Fig. 5A; and
Fig. 6 is a flow diagram of steps of a computer program implementing a method in accordance with the present invention.

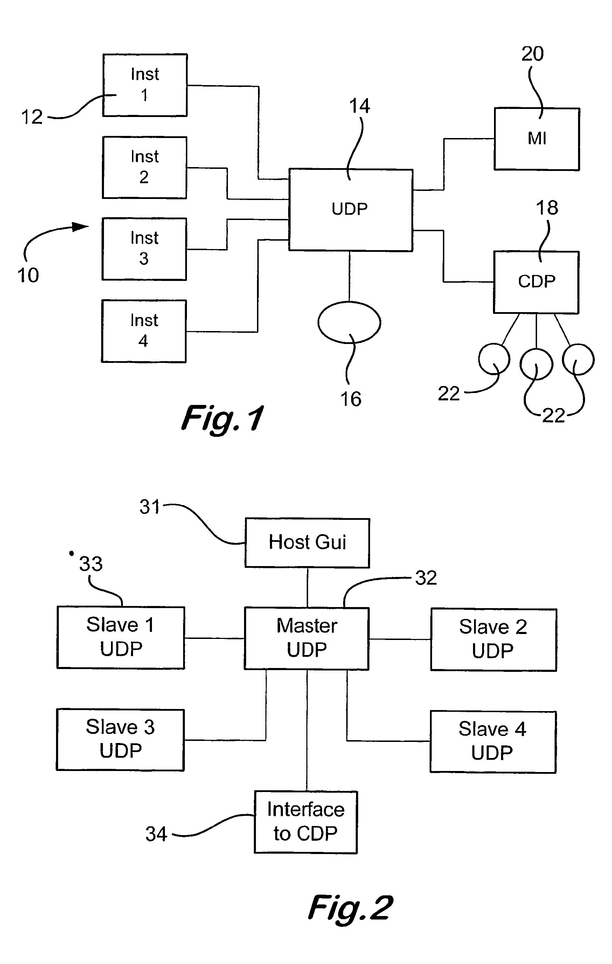

Referring to Fig. 1 an apparatus generally identified by reference numeral 10 is designed for measuring the thickness of the wall of a tubular by ultrasonic inspection. The apparatus 10 comprises ultrasonic transducers and related instruments 12 ("Inst 1, 2, 3, 4"). In use, the ultrasonic transducers and related instruments 12 generate raw electronic data representative of the thickness of the wall of a tubular at a particular location. The raw data is sent to one or more ultrasonic data processor(s) 14 ("UDP") that produce a correlation between each wall thickness measurement and the particular location of that measurement that will be described in greater detail below. Optionally, the UDP 14 provides output signals to a graphical display unit 16 (e.g. monitor or screen) and/or to a user-machine interface system 20 ("MI") to display the correlation to a user. Data from the ultrasonic data processor(a) 14 may, optionally, also be sent to a command and data processor 18 ("CDP") which coordinates data from multiple inspection machines 22 (which may, for example, produce measurements of other parameters, e.g., but not limited to, ovality, flux leakage, and grade versification etc.).

Data may be sent from the ultrasonic transducers and related instruments 12 via Ethernet cable and associated devices, by other suitable means, and/or wirelessly. The output of the ultrasonic data processor (s) 14 is in the form of digital signals and/or display on screen and is sent to the user-machine interface 20 via Ethernet cable, by other suitable means, and/or wirelessly. Output data in the form of digital signals and/or display on screen is also, optionally, sent to the command and data processor 18 by similar apparatus and methods.

The ultrasonic data processor 14 is a computer that is programmed to organize data from the ultrasonic transducers and related instruments 12 as a two-dimensional graph of substantially the entire wall of a pipe being inspected (a pipe image), and as an axial position-versus-signal amplitude graph that presents details of measurements taken along a specific part of the pipe surface (e.g. along its length and around its circumference).

In one particular embodiment the pipe surface is divided into a matrix of discrete segments, e.g. 30 segments, each covering 12° of the pipe's 360° circumference; each segment having one dimensions that is part of the pipe's total length and another dimension which is part of the pipe's total circumference. For example, with a pipe's length divided into discrete circumferential segments each with a first dimension that is 0.0254m (1") of the pipe's length, the other dimension will be 0.0127m (0.5") for a pipe of 0.2m circumference i.e., when the pipe surface is viewed as a flattened rectangle, each segment has a longitudinal dimension of 0.0254m (1") and a vertical dimension of 0.0127m (0.5"). Of course, the circumferential size of the segment varies according to the circumference of the pipe and is generally equal to the pipe circumference divided by the desired number of segments. Each ultrasonic transducer has a working face that is the same size as a segment, i.e. 0.0254m by 0.0127m. The ultrasonic transducers and related instruments 12 take a wall thickness measurement every 0.001.m (1mm) along the pipe's circumference. The data produced is grouped by segment and will be described in greater detail below. An analysis of the pipe can be performed with the 2-dimensional input data from the UDP 14 using 2-dimensional processing in the machine interface 20 or other appropriate apparatus. In certain particular aspects the range of dimensions for the pipe segments (both longitudinally and circumferentially) is approximately between 0.01m (1cm) and 0.05m (5cm).

The apparatus 10 has a machine interface 20 that, as shown in Fig. 2, comprises a graphical user interface 31 ["Host Gui" (MMI)] for adjusting and configuring the ultrasonic transducers and related instruments 12. The graphical user interface 12 can also access, direct, and control a separate master ultrasonic data processor 32 ("Master UDP") , which master UDP controls multiple slave UDPs 33 ("Slave 1, UDP, Slave 2, UDP, etc.).

An interface 34 ("Interface to CDP") provides an interface between the master UDP 32 and the command and data processor 18. The master UDP 32 and the slave UDPs 33 may be any suitable computer or computerized system (e.g. computer network) or apparatus. In one particular aspect of the apparatus 10, the ultrasonic data processor 14 and the graphical user interface 31 is an appropriately programmed computer, e.g., but not limited to a computer with a Windows® 2000 operating system; the master UDP 32 is a similar computer; the slave UDPs 33 are similar computers respectively; and the interface 34 is a similar computer; but it is within the scope of this invention for all of the functions of all of these to be stored and executed on one (or a few e.g, two or three) appropriately powerful aomputer(s).

The master UDP 32 consolidates the output from the slave UDPS 33. This involves correlating the inspection data (i.e. measurements of wall thickness) from each transducer with the longitudinal and circumferential position on the pipe where each reading was taken. Finally, the master UDP 32 transmits the processed inspection data to the command and data processor 18 and to the graphical user interface 31 for display to an operator on a monitor or screen. The results that may be displayed include maximum, minimum and average wall thickness per segment, and/or flaw amplitudes as a percent of full scale longitudinal inner diameter flaw amplitude, longitudinal outer diameter flaw amplitude, transverse inner diameter and outer diameter, and multiple categories of oblique flaws (e.g., at three different angles) for both inner and outer diameter; and the master UDP 32 steers user commands from the graphical user interface 31 to a (or the) slave UDP(s) and/or ultrasonic transducer instrument(s) 12.

The slave UDPs 33 reduce information bandwidth by removing all defect signals that do not reach a certain pre-selected "peak qualified" amplitude (i.e., signals that do not indicate a flaw or anomaly that has been predetermined to be insignificant). The slave UPS 33 produce error corrected wall thickness results, e.g. average wall thickness. It is to be noted that wall thickness data is still produced (and/or electronically recorded and/or displayed) for substantially the entire pipe, although small defects that are deemed unimportant to mechanical properties of the pipe are ignored.

The user-machine interface system 20 directs or "loads" the instruments 12 with configuration information (which may, e.g., include ultrasonic control settings such as drive pulse width, drive pulse voltage, signal gain, signal polarity, gate width, gate threshold value etc.) and loads the ultrasonic data processor 14 with configuration and calibration parameters, e.g, for adjustments to obtain real wall thickness. The user-machine interface system 20 provides a system operator with control of the pipe inspection process and does this on a per-channel basis for each instrument and/or for each transducer. The user-machine interface system 20 can, optionally, display inspection data in real time as an inspection trace on a monitor or screen or on a strip-chart output. The user-machine interface optionally, in certain aspects, provides a pipe image in colour or black and white showing the wall thickness of substantially the entire pipe together with localised flaws in the pipe or wall thickness anomalies. The user-machine interface 20 in certain aspects, prints an image from a screen automatically or upon operator request; saves inspection data to a hard disc; and/or replays inspection data from a selected electronic file or files.

The command and data processor 18, in certain aspects, provides a printed report for a particular joint of pipe that has been inspected; saves the report as an electronic file; and/or produces a hard copy or electronic chart, grid or map that shows the wall thickness signal amplitude for each discrete segment of the pipe that has been inspected. These stored electronic files may be associated with the joint number of pipe that has been inspected to make for easier look-up subsequently,

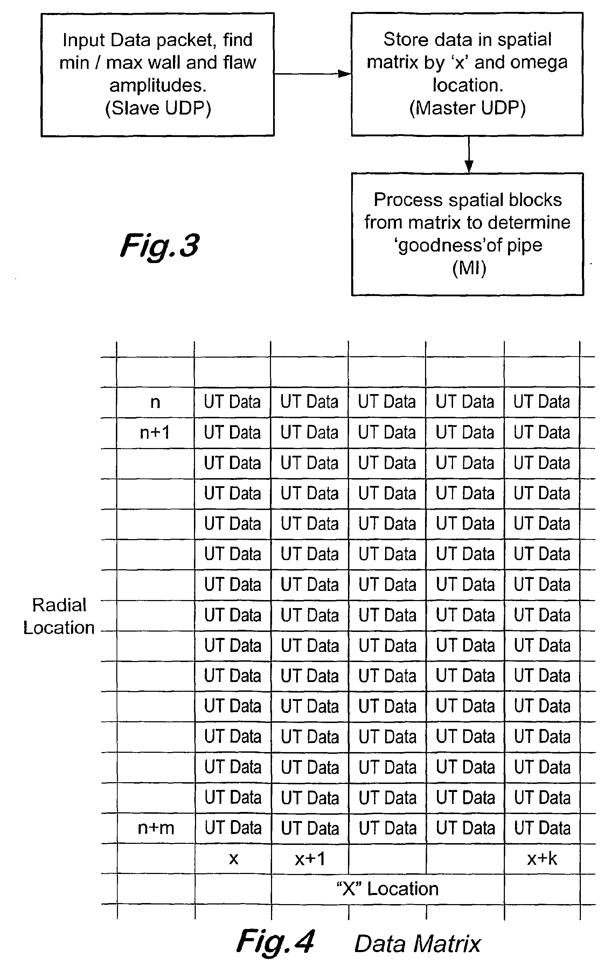

Fig. 3 shows schematically the flow of data from one or more slave UDP 33 to the master UDP 32 and to the user-machine interface 20. The slave UDP(s) 33 receive the input data ("Input data packet") from the ultrasonic transducers 12 and each determine minimum, maximum and average wall thickness signal and any flaw signal amplitudes for each segment. The master UDP 32 processes the data from the slave UDPs to produce a two-dimensional data array or matrix (e.g. " 'x' and omega" or length along pipe vs. circumferential segment location). The master UDP 32 then sends its results (e.g. map, table, chart, grid, matrix, array) to the machine interface 20 that, optionally, processes the map etc. data, analyses it, and/or categorizes and/or determines relative strength for the pipe (determines 'goodness' of pipe). For example the average wall thickness of the pipe may be analysed to determine whether or not it falls below a predetermined percentage of the full desired width. What the percentage actually is will depend upon the use of the intended use of the pipe. Analysis of the data may be performed away from the site (or in a separate process) where the wall thickness data is obtained. For example, the manufacturer of the pipe may generate the wall thickness data and supply this data with the pipe to a customer. The customer may then perform their own analysis using the data depending on the intended use of the pipe. For example, the customer might use the data in conjunction with finite element analysis software to determine the mechanical properties of each joint of pipe. The stronger pipe can then be used in locations where greater strength and durability is a desirable property.

In this way the measurement of wall thickness for substantially the entire pipe enables the mechanical properties of each joint of pipe to be more accurately predicted. In prior methods only defects have been recorded and thus the overall mechanical properties of the pipe have remained unknown. For example, certain pipes may have relatively large expanses of comparatively thin wall thickness that, whilst not triggering recording of an actual defect with prior apparatus, nonetheless impair the mechanical properties of the pipe,

Fig. 4 is a graphical presentation format or "map" for presenting data according to the present invention with an apparatus as described above. The x-axis is the length of the pipe that is inspected i.e. the longitudinal position of the measurement. The y-axis is the radial or circumferential location of a discrete pipe segment. The first segment of the inspected pipe is "x"; the next segment is "x+1"; and the last segment is "x+k". The first segment may be 0.0254m to 0.051m (1" to 2") for example (in one aspect it may be zero to one inch). The first circumferential measurement is "n"; "n+1" is the next; and "n+m" is the last. Of course it is within the scope of the present invention to use any desirable length segment, including, but not limited to, approximately, 3mm, 6mm, 9mm, 12mm, 16mm, 19mm, 22mm, 25mm, 31mm, 38mm and 51mm; and the segments may extend radially for any desired amount of the pipe's total circumference, including, but not limited to 3, 5, 6, 10, 12, 20, and 30 degrees. The smaller each segment in terms of the number of incremental measurements, the greater the resolution of the maximum, minimum and average wall thickness measurements and therefore the more accurate the estimation of the mechanical properties of the pipe can be.

The "UT Data" for each particular discrete segment of the pipe's surface may include maximum and minimum wall thickness for that segment and/or average wall thickness; and inner and outer flaw signal amplitude for longitudinal, transverse, and oblique (three categories) as percent of full scale.

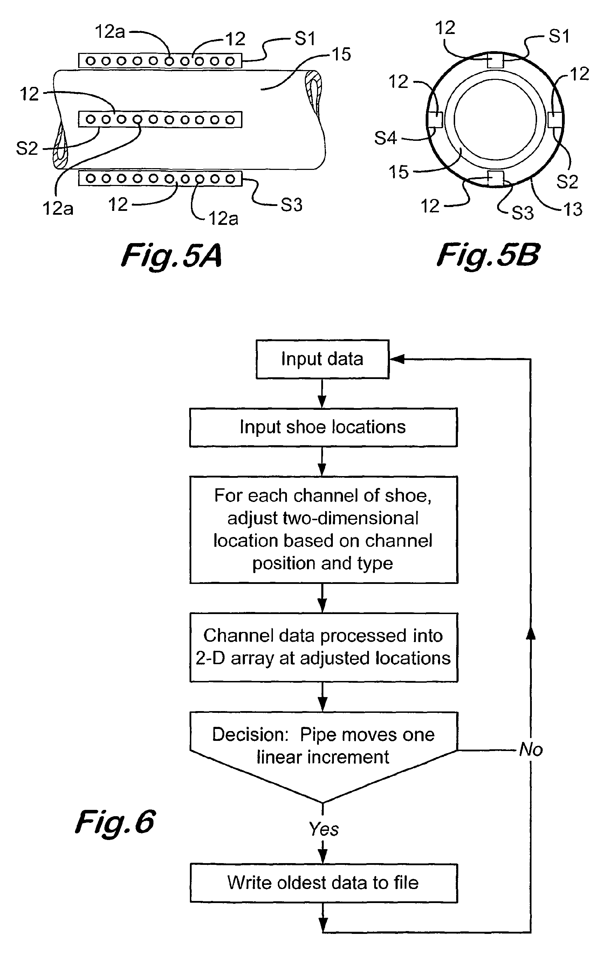

Figs. 5A and 5B show schematically an ultrasonic transducer instrument mounting apparatus for inspection of pipe. Ultrasonic transducer instruments 12 are mounted on a head 13. In use, the ultrasonic transducers instruments 12 are operated at 5MHz to measure wall thickness and the head 13 is rotated at up to approximately 350 rpm around a pipe 15 that passes through the head 13 at between approximately 0.2ms⁻¹ (40ft/min) and approximately 1.0ms⁻¹ (200ft/min). The ultrasonic transducer instruments 12 may have any desired number of ultrasonic transducers 12a; and, as shown in Fig. 5A, in this particular embodiment, there are 10 ultrasonic transducers on each of four "shoes" S1, S2, S3, S4. Each ultrasonic transducer has a working face of 0.0254m (1") by 0.0127m (0.5") i.e. the same size as segment on the pipe over which data is collected, although this is not essential.

A circumferential position detector (not shown) generally similar to that described in US-A-5 030 911 is mounted on the head. The circumferential position detector comprises a piece of metal mounted on a rotating part of the head and a sensor mounted on a stationary portion of the head. The sensor generates a signal on each passing of the piece of metal. The sensor signal is passed to a phase locked loop (not shown) that is configured as a frequency multiplier. The frequency of the sensor signal is used to generate another signal 30 times higher in frequency. This signal is sent to a digital counter that is reset every time the proximity sensor generates a signal. Data output from the transducers is associated with the counter value at the time the reading is taken. In this way the digital counter serves to divide the output data into 30 segments whatever the rotational speed of the ultrasonic transducer instruments 12 and provides a reference point for determining the circumferential position of each measurement. By associating the counter values with the digital data representing wall thickness it is possible to determine where the transducer was relative to the circumference of the pipe for each measurement.

A longitudinal position detector (not shown) generally similar to that described in US-A-5 030 911 is also mounted on the head to provide a longitudinal position signal representing the position of the head relative to the length of the pipe when each transducer measurement is made. In this way the digital data may be associated with a longitudinal position on the pipe.

Fig. 6 presents schematically a diagram of steps in a computer program for controlling apparatus similar to the systems of Fig. 1 and Fig. 2.

The slave UDP (s) 33 selects the data from the data stream indicating flaws that exceed a predetermined threshold (as described above) and wall thickness, and send signals indicative thereof ("input data") to the master UDP 32. The master UDP 32 receives data from circumferential and longitudinal position detectors as described above and correlates the data with specific locations on the pipe for input data from the slave UDP(s) 33 ("Input shoe locations"). Optionally, the master UDP 32 adjusts the data related to specific locations on the pipe based on the actual location of a shoe and its transducers on a per-transducer-channel basis ("For each channel of shoe... "). For example, it will be seen in Figs, 5A and 5B that the ultrasonic transducers are spaced longitudinally relative to the pipe. The longitudinal position detector outputs only one position signal at any one time. The master UDP 32 knows where each transducer is relative to the longitudinal position detector and adjusts the longitudinal position signal accordingly for each ultrasonic transducer.

The master UDP 32 then processes the adjusted channel data and produces the map, etc. which presents the correlation of wall thickness measurements of substantially the entire pipe with precise pipe locations ("channel data processed into 2-D array at adjusted locations"). The master UDP 32 can discriminate between multiple signals and select the "best" (largest amplitude) signal indicative of a particular measurement or flaw and can use the thus-selected signals in producing the map of wall thickness of substantially the entire pipe. If data has been received for all the circumferential segments around the pipe at a particular linear location ("Decision: pipe moves one linear increment") ("Yes;), then the apparatus moves the pipe to the next linear increment. If data has not been received for all the circumferential segments at a particular linear location ("No"), the inspection at that location continues with raw data from transducers, input data from the slave UDPs, etc., until all segments around the entire circumference are accounted for. Once all segments around the circumference of a particular linear increment have been completed, the ultrasonic data processor 14's master UDP 32 sends the data or map for that linear increment to the machine interface 20 and/or to the command and data processor 18. The machine interface 20 receives data from the system 14 and records it ("Write oldest data to file").

## Claims

1. A method of inspecting the integrity of a tubular (15) with a rotary-type ultrasonic inspection head (13), which method comprises the steps of:
(a) dividing the length of said tubular into a continuous series of length increments and with an ultrasonic inspection means (12) taking measurements representative of the wall thickness around substantially the entire circumference at each length increment along substantially the entire length of said tubular;
(b) during step (a) measuring the longitudinal position of ultrasonic inspection means (12) relative to said tubular, and associating each measurement to a particular length increment;
(c) generating electronic data from said measurements representative of the wall thickness over substantially the entire tubular; and
(d) electronically storing substantially all of said electronic data, the storage of data representing wall thickness over substantially the entire tubular facilitating both estimation of the overall mechanical properties of the tubular and identification of localised defects;
**characterised in that** step (a) comprises the step of progressively taking said measurements around the circumference of said tubular (15) by dividing the circumference of each length increment into a continuous series of segments, and for each length increment taking a plurality of measurements in each segment around said circumference, and electronically determining and storing a maximum, minimum and average wall thickness measurement for each segment,
and **in that** step (b) comprises the steps of measuring the circumferential position of said ultrasonic inspection means (12) relative to said tubular as each measurement is taken, associating each measurement with its respective circumferential position, and using said circumferential position to group measurements into said segments, whereby determination of said maximum, minimum and average wall thickness for each segment is facilitated.

2. A method as claimed in claim 1, wherein each segment is related to a circumferential dimension and a longitudinal dimension on said tubular (15), the method further comprising the step of providing said inspection means (12) with a working face having dimensions substantially equal to the circumferential and longitudinal dimensions of said segment.

3. A method as claimed in claim 2, wherein both said circumferential dimension and said longitudinal dimension are each between about 0.01m and 0.05m.

4. A method as claimed in claim 1, 2 or 3, further comprising the step of electronically analysing said electronic data to determine whether or not said tubular (15) has any localised defects in wall thickness.

5. A method as claimed in any of claims 1 to 4, further comprising the step of electronically analysing said electronic data to determine said overall mechanical properties of the tubular (15).

6. A method as claimed in any preceding claim, wherein said inspection means (12) is rotatably mounted on said head (13), the method further comprising the steps of moving said tubular (15) relative to said head, rotating said inspection means around said pipe and taking said measurements whilst rotating.

7. A method as claimed in claim 6, further comprising the steps of providing a circumferential position sensor means and a longitudinal position sensor means for determining the circumferential and longitudinal positions of said inspection means relative to said tubular (15), and storing said electronic data according to a respective electronic output signal from each of said positions sensor means when each measurement is taken.

8. A method as claimed in claim 7, further comprising the steps of providing a plurality of inspection means (12a) spaced axially relative to the tubular, and adjusting the circumferential and longitudinal position associated with each measurement depending on the position of the inspection means making the measurement relative to said circumferential and longitudinal position sensor means.

9. A method as claimed in claim 7 or 8, further comprising the step of storing said electronic data in the form of a matrix, the position of each data in the matrix corresponding to a circumferential and longitudinal position on said tubular (15) where said wall thickness measurement was taken.

10. A method as claimed in any of claims 7, 8 or 9, further comprising the step of the circumferential position sensor means generating an electronic signal after each revolution of said inspection means (12), and generating an electronic clock signal n times higher than the frequency of said electronic signal, said electronic clock signal enabling the division of said electronic data into n segments per revolution, each of which segments comprises a plurality of wall thickness measurements.

11. A method as claimed in claim 10, further comprising the steps of said electronic clock signal driving a digital counter that is reset at the electronic signal frequency and counts at the electronic clock signal frequency, and associating said electronic data with a digital counter value to enable the circumferential position of that measurement to be known subsequently.

12. A method as claimed in any preceding claim, further comprising the step of outputting part or all of said electronic data to a visual display (31) to provide an operator with information representative of the wall thickness of the tubular.

13. A method as claimed in any preceding claim wherein the step of storing said electronic data comprises the step of writing the electronic data to an electronic file, the electronic file being associated with a tubular identification means, for example a joint number, of said tubular.

14. A method of estimating the mechanical properties of a tubular (15) which method comprises the steps of:
(a) analysing electronic data generated in accordance with any of claims 1 to 13;
(b) classifying each tubular, of a plurality of tubulars upon which said electronic data was obtained, according to the expected mechanical properties thereof.

15. A method as claimed in claim 14, wherein stop (a) is performed using a finite element analysis method.

16. An apparatus for performing the method of claim 1 , which apparatus comprises:
an ultrasonic inspection means (12) rotatable mounted on a head (13) that, in use, generates wall thickness measurements of a tubular under inspection;
electronic storage means (18) for storing substantially all of the electronic data from said measurements generated by said inspection means;
longitudinal position sensor means for generating and electronic signal representative of the longitudinal position of said inspection means relative to said tubular;
circumferential position sensor means for generating and electronic signal representative of the circumferential position of said inspection means relative to said tubular; and
an ultrasonic data processor (14), which apparatus is configured to perform the method steps of claim 1.

17. An apparatus as claimed in claim 16, wherein, in use, said circumferential position sensor means generates an electronic signal after each revolution of said inspection means, the apparatus further comprising signal generating means for generating an electronic clock signal n times higher than the frequency of said electronic signal, said electronic clock signal enabling the division of said electronic data into n segments per revolution, each of which segments comprises a plurality of wall thickness measurements.

18. An apparatus as claimed in claim 17, wherein said signal generating means comprises a phase locked loop for producing said electronic clock signal.

19. An apparatus as claimed in claim 17 or 18 , wherein said electronic clock signal drives a digital counter that is reset at the electronic signal frequency and counts at the electronic clock signal frequency, the arrangement being such that said electronic data can be associated with a digital counter value to enable the circumferential position of that measurement to be known subsequently.

20. An apparatus as claimed in any of claims 16 to 19, further comprising a longitudinal position sensor means for generating and electronic signal representative of the longitudinal position of said inspection means relative to said tubular, the electronic signal being used to associate said electronic data with a longitudinal position of the inspection means for subsequent reference.

21. A computer program product for loading into memory of a control computer part of an apparatus as claimed in any of claims 16 to 20, which computer program product comprises computer executable instructions for causing said apparatus to perform the steps of claim 1 when said product is run by said control computer part.

## Patentansprüche

1. Verfahren zum Untersuchen der Integrität eines Rohrs (15) mit einem Ultraschalluntersuchungskopf (13) des rotierenden Typs, wobei das Verfahren die folgenden Schritte umfasst:
(a) Unterteilen der Länge des Rohrs in eine ununterbrochene Reihe von Längeninkrementen und mittels eines Ultraschalluntersuchungsmittels (12) Ausführen von Messungen, die die Wanddicke im Wesentlichen auf dem gesamten Umfang bei jedem Längeninkrement im Wesentlichen auf der gesamten Länge des Rohrs repräsentieren;
(b) während des Schrittes (a) Messen der Längsposition des Ultraschalluntersuchungsmittels (12) in Bezug auf das Rohr und Zuordnen jeder Messung zu einem bestimmten Längeninkrement;
(c) Erzeugen elektronischer Daten aus den Messungen, die die Wanddicke im Wesentlichen über das gesamte Rohr repräsentieren; und
(d) elektronisches Speichern im Wesentlichen aller dieser elektronischen Daten, wobei die Speicherung der Daten, die die Wanddicke im Wesentlichen über das gesamte Rohr repräsentieren, sowohl die Schätzung der gesamten mechanischen Eigenschaften des Rohrs als auch die Identifizierung lokalisierter Defekte erleichtert;
**dadurch gekennzeichnet, dass** der Schritt (a) den Schritt des progressiven Ausführens der Messungen auf dem Umfang des Rohrs (15) durch Unterteilen des Umfangs jedes Längeninkrements in eine ununterbrochene Reihe von Segmenten und für jedes Längeninkrement des Ausführens mehrerer Messungen in jedem Segment auf dem Umfang und des elektronischen Bestimmens und Speicherns einer maximalen, einer minimalen und einer durchschnittlichen Wanddickenmessung für jedes Segment umfasst,
und dass der Schritt (b) die Schritte des Messens der Umfangsposition des Ultraschalluntersuchungsmittels (12) in Bezug auf das Rohr, wenn jede Messung ausgeführt wird, des Zuordnens jeder Messung zu ihrer entsprechenden Umfangsposition und des Verwendens der Umfangsposition, um Messungen in die Segmente zu gruppieren, umfasst, wodurch die Bestimmung der maximalen, der minimalen und der durchschnittlichen Wanddicke für jedes Segment erleichtert wird.

2. Verfahren nach Anspruch 1, wobei jedes Segment mit einer Umfangsdimension und einer Längsdimension an dem Rohr (15) in Beziehung steht, wobei das Verfahren ferner den Schritt des Versehens des Untersuchungsmittels (12) mit einer Arbeitsfläche, die Abmessungen besitzt, die im Wesentlichen gleich der Umfangsabmessung und der Längsabmessung des Segments ist, umfasst.

3. Verfahren nach Anspruch 2, wobei sowohl die Umfangsabmessung als auch die Längsabmessung jeweils im Bereich von etwa 0,01 m bis 0,05 m liegt.

4. Verfahren nach Anspruch 1, 2 oder 3, das ferner den Schritt des elektronischen Analysierens der elektronischen Daten umfasst, um zu bestimmen, ob in dem Rohr (15) irgendwelche lokalisierten Defekte in der Wanddicke vorhanden sind.

5. Verfahren nach einem der Ansprüche 1 bis 4, das ferner den Schritt des elektronischen Analysierens der elektronischen Daten umfasst, um die gesamten mechanischen Eigenschaften des Rohrs (15) zu bestimmen.

6. Verfahren nach einem vorhergehenden Anspruch, wobei das Untersuchungsmittel (12) an dem Kopf (13) drehbar montiert ist, wobei das Verfahren ferner die Schritte des Bewegens des Rohrs (15) relativ zu dem Kopf, das Drehen des Untersuchungsmittels um das Rohr und das Ausführen der Messungen während des Drehens umfasst.

7. Verfahren nach Anspruch 6, das ferner die Schritte des Vorsehens eines Umfangspositions-Sensormittels und eines Längspositions-Sensormittels zum Bestimmen der Umfangsposition bzw. der Längsposition des Untersuchungsmittels relativ zu dem Rohr (15) und des Speicherns der elektronischen Daten in Übereinstimmung mit einem jeweiligen elektronischen Ausgangssignal von jedem Positionssensormittel, wenn jede Messung ausgeführt wird, umfasst.

8. Verfahren nach Anspruch 7, das ferner die Schritte des Vorsehens mehrerer Untersuchungsmittel (12a), die relativ zu dem Rohr axial beabstandet sind, und das Einstellen der Umfangsposition und der Längsposition, die jeder Messung zugeordnet ist, in Abhängigkeit von der Position des Untersuchungsmittels, das die Messung ausführt, relativ zu den Umfangspositions- und Längspositions-Sensormitteln umfasst.

9. Verfahren nach Anspruch 7 oder 8, das ferner den Schritt des Speicherns der elektronischen Daten in Form einer Matrix umfasst, wobei die Position jedes Datenelements in der Matrix einer Umfangsposition und einer Längsposition an dem Rohr (15), an der die Wanddickenmessung vorgenommen wurde, entspricht.

10. Verfahren nach einem der Ansprüche 7, 8 oder 9, das ferner den Schritt umfasst, bei dem das Umfangspositions-Sensormittel nach jeder Umdrehung des Untersuchungsmittels (12) ein elektronisches Signal erzeugt und ein elektronisches Taktsignal erzeugt, das n-mal höher als die Frequenz des elektronischen Signals ist, wobei das elektronische Taktsignal die Unterteilung der elektronischen Daten in n Segmente pro Umdrehung ermöglicht, wobei jedes der Segmente mehrere Wanddickenmessungen enthält.

11. Verfahren nach Anspruch 10, das ferner die Schritte enthält, bei denen das elektronische Taktsignal einen digitalen Zähler ansteuert, der mit der Frequenz des elektronischen Signals zurückgesetzt wird und der die Frequenz des elektronischen Taktsignals zählt, und bei denen die elektronischen Daten einem digitalen Zählerwert zugeordnet werden, um zu ermöglichen, dass die Umfangsposition dieser Messung anschließend bekannt ist.

12. Verfahren nach einem vorhergehenden Anspruch, das ferner den Schritt des Ausgebens eines Teils der oder aller elektronischen Daten an eine visuelle Anzeige (31) umfasst, um für eine Bedienungsperson Informationen bereitzustellen, die die Wanddicke des Rohrs repräsentieren.

13. Verfahren nach einem vorhergehenden Anspruch, wobei der Schritt des Speicherns der elektronischen Daten den Schritt des Schreibens der elektronischen Daten in eine elektronische Datei umfasst, wobei die elektronische Datei einem Rohridentifizierungsmittel, beispielsweise einer Fugenanzahl des Rohrs zugeordnet ist.

14. Verfahren zum Schätzen der mechanischen Eigenschaften eines Rohrs (15), wobei das Verfahren die folgenden Schritte umfasst:
(a) Analysieren elektronischer Daten, die in Übereinstimmung mit einem der Ansprüche 1 bis 13 erzeugt werden;
(b) Klassifizieren jedes von mehreren Rohren, für die die elektronischen Daten erhalten wurden, entsprechend ihren erwarteten mechanischen Eigenschaften.

15. Verfahren nach Anspruch 14, wobei der Schritt (a) unter Verwendung eines Verfahrens der Analyse finiter Elemente ausgeführt wird.

16. Vorrichtung zum Ausführen des Verfahrens nach Anspruch 1, wobei die Vorrichtung umfasst:
ein Ultraschalluntersuchungsmittel (12), das an einem Kopf (13) drehbar montiert ist und das im Gebrauch Wanddickenmessungen eines momentan untersuchten Rohrs erzeugt;
elektronische Speichermittel (18), um im Wesentlichen alle elektronischen Daten aus den Messungen, die durch das Untersuchungsmittel erzeugt werden, zu speichern;
Längspositions-Sensormittel, um ein elektronisches Signal zu erzeugen, das die Längsposition des Untersuchungsmittels relativ zu dem Rohr repräsentiert;
Umfangspositions-Sensormittel, um ein elektronisches Signal zu erzeugen, das die Umfangsposition des Untersuchungsmittels relativ zu dem Rohr repräsentiert; und
einen Ultraschalldatenprozessor (14), wobei die Vorrichtung konfiguriert ist, um die Verfahrensschritte nach Anspruch 1 auszuführen.

17. Vorrichtung nach Anspruch 16, wobei im Gebrauch die Umfangspositions-Sensormittel ein elektronisches Signal nach jeder Umdrehung des Untersuchungsmittels erzeugen, wobei die Vorrichtung ferner Signalerzeugungsmittel umfasst, um ein elektronisches Taktsignal zu erzeugen, das n-mal höher als die Frequenz des elektronischen Signals ist, wobei das elektronische Taktsignal die Unterteilung der elektronischen Daten in n Segmente pro Umdrehung ermöglicht, wobei jedes der Segmente mehrere Wanddickenmessungen enthält.

18. Vorrichtung nach Anspruch 17, wobei die Signalerzeugungsmittel einen Phasenregelkreis umfassen, um das elektronische Taktsignal zu erzeugen.

19. Vorrichtung nach Anspruch 17 oder 18, wobei das elektronische Taktsignal einen digitalen Zähler ansteuert, der mit der Frequenz des elektronischen Signals zurückgesetzt wird und die Frequenz des elektronischen Taktsignals zählt, wobei die Anordnung derart ist, dass die elektronischen Daten einem Wert des digitalen Zählers zugeordnet werden können, um zu ermöglichen, dass die Umfangsposition dieser Messung anschließend bekannt wird.

20. Vorrichtung nach einem der Ansprüche 16 bis 19, die ferner ein Längspositions-Sensormittel umfasst, um ein elektronisches Signal zu erzeugen, das die Längsposition des Untersuchungsmittels relativ zu dem Rohr repräsentiert, wobei das elektronische Signal verwendet wird, um die elektronischen Daten einer Längsposition des Untersuchungsmittels für eine nachfolgende Bezugnahme zuzuordnen.

21. Computerprogrammprodukt, das in einen Speicher eines Steuercomputerabschnitts einer Vorrichtung nach einem der Ansprüche 16 bis 20 geladen werden kann, wobei das Computerprogrammprodukt computerausführbare Befehle enthält, um die Vorrichtung dazu zu veranlassen, die Schritte von Anspruch 1 auszuführen, wenn das Produkt durch den Steuercomputerabschnitt ausgeführt wird.

## Revendications

1. Procédé d'inspection de l'intégrité d'un élément tubulaire (15) au moyen d'une tête d'inspection ultrasonore de type rotatif (13), lequel procédé comprend les étapes consistant à :
(a) diviser la longueur dudit élément tubulaire en une série continue d'incréments de longueur et avec des moyens d'inspection ultrasonore (12) prendre des mesures représentatives de l'épaisseur de paroi essentiellement pour toute la circonférence sur chaque incrément de longueur, essentiellement sur toute la longueur dudit élément tubulaire ;
(b) lors de l'étape (a) mesurer la position longitudinale du moyen d'inspection ultrasonore par rapport audit élément tubulaire, et associer chaque mesure à un incrément de longueur spécifique ;
(c) créer des données électroniques à partir desdites mesures représentatives de l'épaisseur de paroi sur essentiellement tout l'élément tubulaire ; et
(d) mémoriser électroniquement essentiellement toutes lesdites données électroniques, la mémorisation des données représente l'épaisseur de paroi sur essentiellement tout l'élément tubulaire facilitant à la fois l'estimation des caractéristiques mécaniques générales de l'élément tubulaire et l'identification de défaillances localisées ;
**caractérisé en ce que** l'étape (a) comprend l'étape consistant à prendre progressivement lesdites mesures sur la circonférence dudit élément tubulaire (15) en divisant la circonférence de chaque incrément de longueur en une série continue de segments, et pour chaque morceau d'incrément prendre une pluralité de mesures de chaque segment autour de ladite circonférence, et déterminer électroniquement et mémoriser une mesure maximum, minimum et moyenne de l'épaisseur de la paroi pour chaque segment,
et **en ce que** l'étape (b) comprend les étapes consistant à mesurer la position circonférentielle dudit moyen d'inspection ultrasonore (12) par rapport audit élément tubulaire à chaque mesure prise, associant chaque mesure avec sa propre position circonférentielle, et utilisant ladite position circonférentielle pour regrouper les mesures dans lesdits segments, si bien que la détermination de l'épaisseur maximum, minimum et moyenne de la paroi pour chaque segment est facilitée.

2. Procédé selon la revendication 1, dans lequel chaque segment a trait à une dimension circonférentielle et une dimension longitudinale sur ledit élément tubulaire (15), le procédé comprenant en outre l'étape consistant à fournir lesdits moyens d'inspection (12) sur une surface de travail ayant des dimensions pratiquement égales aux dimensions circonférentielles et longitudinales dudit segment.

3. Procédé selon la revendication 2, dans lequel à la fois ladite dimension circonférentielle et ladite dimension longitudinale sont chacune comprises entre environ 0,01 m et 0,05 m.

4. Procédé selon la revendication 1, 2 et 3, comprenant en outre l'étape consistant à analyser électroniquement lesdites données électroniques afin de déterminer si ledit élément tubulaire (15) a ou non de quelconques défauts localisés dans l'épaisseur de la paroi.

5. Procédé selon l'une quelconque des revendications 1 à 4, comprenant en outre l'étape consistant à analyser électroniquement lesdites données électroniques afin de déterminer lesdites caractéristiques mécaniques globales de l'élément tubulaire (15).

6. Procédé selon l'une quelconque des revendications précédentes, dans lequel ledit moyen d'inspection (12) est monté de façon rotative sur ladite tête (13), le procédé comprenant en outre les étapes consistant à déplacer ledit élément tubulaire (15) par rapport à la tête, à faire tourner le moyen d'inspection autour dudit tube et à prendre lesdites mesures pendant qu'il tourne.

7. Procédé selon la revendication 6, comprenant en outre les étapes consistant à procurer un moyen de capteur de position circonférentielle et un moyen de capteur de position longitudinale permettant de déterminer les positions circonférentielles et longitudinales desdits moyens d'inspection par rapport audit élément tubulaire (15), et mémoriser lesdites données électroniques en fonction d'un signal de sortie électronique respectif provenant de chacun desdits moyens de capteur de position lorsque chaque mesure est prise.

8. Procédé selon la revendication 7, comprenant en outre les étapes consistant à fournir une pluralité de moyens d'inspection (12a) espacés axialement par rapport à l'élément tubulaire, et ajuster la position circonférentielle et longitudinale associée à chaque mesure en fonction de la position des moyens d'inspection réalisant la mesure par rapport auxdits moyens de capteur de position circonférentielle et longitudinale.

9. Procédé selon la revendication 7 ou 8, comprenant en outre l'étape consistant à mémoriser lesdites données électroniques sous la forme d'une matrice, la position de chaque donnée dans la matrice correspondant à une position circonférentielle et longitudinale sur ledit élément tubulaire (15) dans laquelle lesdites mesures de l'épaisseur de paroi ont été prises.

10. Procédé selon l'une quelconque des revendications 7, 8 ou 9, comprenant en outre l'étape consistant à ce que le moyen de capteur de position circonférentielle produise un signal électronique après chaque révolution dudit moyen d'inspection (12), et produise un signal électronique d'horloge n fois supérieur à la fréquence dudit signal électronique, ledit signal électronique d'horloge permettant la séparation desdites données électroniques en n segments par révolution, dont chacun comprend une pluralité de mesures d'épaisseur de paroi.

11. Procédé selon la revendication 10, comprenant en outre les étapes consistant à ce que ledit signal électronique d'horloge commande un compteur numérique qui est réinitialisé sur la fréquence du signal électronique et qui compte sur la fréquence du signal électronique d'horloge, et associant auxdites données électroniques une valeur de comptage numérique afin de pouvoir connaître ultérieurement la position circonférentielle de cette mesure.

12. Procédé selon l'une quelconque des revendications précédentes, comprenant en outre l'étape consistant à visualiser en partie ou en intégralité lesdites données électroniques sur un dispositif de visualisation (31) afin de fournir à un opérateur les informations correspondant à l'épaisseur de paroi de l'élément tubulaire.

13. Procédé selon l'une quelconque des revendications précédentes dans lequel l'étape consistant à mémoriser lesdites données électroniques comprend l'étape consistant à écrire les données électroniques dans un fichier électronique, le fichier électronique étant associé aux moyens d'identification de l'élément tubulaire, par exemple un numéro joint, dudit élément tubulaire.

14. Procédé d'estimation des propriétés mécaniques d'un élément tubulaire (15) lequel procédé comprend les étapes consistant à :
(a) analyser les données électroniques produites conformément aux revendications 1 à 13 ;
(b) classer chaque élément tubulaire, d'une pluralité d'éléments tubulaires à partir desquels lesdites données électroniques ont été obtenues, en fonction des propriétés mécaniques théoriques de celui-ci.

15. Procédé selon la revendication 14, dans lequel l'étape (a) est réalisée utilisant un procédé d'analyse par éléments finis.

16. Appareil pour réaliser le procédé de la revendication 1, lequel appareil comprend :
- un moyen d'inspection ultrasonore (12) monté de façon à pouvoir tourner sur une tête (13) qui, en cours d'utilisation, engendre les mesures de l'épaisseur de paroi d'un élément tubulaire examiné ;
- un moyen de mémorisation électronique (18) afin de mémoriser essentiellement toutes les données électroniques provenant desdites mesures engendrées par le moyen d'inspection ;
- un moyen de capteur de position longitudinale pour la production d'un signal électronique représentatif de la position longitudinale dudit moyen d'inspection par rapport audit élément tubulaire ;
- un moyen de capteur de position circonférentielle pour la production d'un signal électronique représentatif de la position circonférentielle dudit moyen d'inspection par rapport audit élément tubulaire ; et
- un processeur de données ultrasonore (14), lequel appareil est configuré pour réaliser les étapes du procédé de la revendication 1.

17. Appareil selon la revendication 16, dans lequel, en cours d'utilisation, ledit moyen de capteur de position circonférentielle produisent un signal électronique après chaque révolution desdits moyens d'inspection, l'appareil comprenant en outre des moyens de production de signal électronique pour produire un signal d'horloge électronique n fois supérieur à la fréquence dudit signal électronique permettant la séparation desdites données électroniques en n segments par révolution, dont chaque segment comprend une pluralité de mesures d'épaisseur de paroi.

18. Appareil selon la revendication 17, dans lequel lesdits moyens de production de signal comprend une boucle asservie en phase pour produire ledit signal d'horloge électronique.

19. Appareil selon la revendication 17 ou 18, dans lequel ledit signal d'horloge électronique commande un compteur numérique qui est réinitialisé sur la fréquence du signal électronique et compte à la fréquence du signal d'horloge électronique, la configuration étant telle que lesdites données électroniques peuvent être associées à une valeur de comptage numérique pour permettre de connaître ultérieurement la position circonférentielle de cette mesure.

20. Appareil selon l'une quelconque des revendications 16 à 19, comprenant en outre des moyens de capteur de position longitudinale pour la production d'un signal électronique représentatif de la position longitudinale desdits moyens d'inspection par rapport audit élément tubulaire, le signal électronique étant utilisé pour associé lesdites données électroniques à la position longitudinale desdits moyens d'inspection pour une référence ultérieure.

21. Programme informatique pour charger dans la mémoire d'une partie d'ordinateur d'un appareil selon l'une quelconque des revendications 16 à 20, lequel programme informatique comprend des instructions exécutables informatiques commandant ledit appareil à réaliser les étapes de la revendication 1 lorsque ledit programme est exécuté par ladite partie d'ordinateur.
